# EUROPÄISCHE PATENTSCHRIFT

(11) **EP 1 125 958 B1**
(45) Veröffentlichungstag und Bekanntmachung des Hinweises auf die Patenterteilung: **09.03.2005**
(21) Anmeldenummer: 01103202.6
(22) Anmeldetag: 12.02.2001
(51) Int. Cl.: C08G 18/38, C08G 18/48, C08K 5/3492

(54) **Verfahren zur Herstellung von hydrophilen flammgeschützten Polyurethanweichschaumstoffen**
Process for the preparation of hydrophilic flame-retardant polyurethane soft foams
Procédé de préparation de mousses de polyuréthane souples, hydrophiles et ignifugeantes

(30) Priorität: 19.02.2000 DE 10007693
(43) Veröffentlichungstag der Anmeldung: 22.08.2001
(73) Patentinhaber: BASF AKTIENGESELLSCHAFT, 67056 Ludwigshafen (DE)
(72) Erfinder: Falke, Peter, Dr., 01987 Schwarzheide (DE); Hendreich, Regina, 01945 Frauendorf (DE); Jackson, Gary, Chellaston, Derby, DE73 1PU (GB)

(56) Entgegenhaltungen:
- EP-A- 0 546 381
- US-A- 4 143 004
- US-A- 5 229 427

## Beschreibung

Die Herstellung von Polyurethanschaumstoffen durch Umsetzung von organischen und/oder modifizierten organischen Polyisocyanaten bzw. Prepolymeren mit höher funktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen, mit Molekulargewichten von z.B. 300 bis 6000, und gegebenenfalls Kettenverlängerungs- und/oder Vernetzungsmitteln mit Molekulargewichten bis ca. 400 in Gegenwart von Katalysatoren, Treibmitteln, Flammschutzmitteln, Hilfsmitteln und/oder Zusatzstoffen ist bekannt und wurde vielfach beschrieben. Eine zusammenfassende Übersicht über die Herstellung von Polyurethanschaumstoffen wird z.B. im Kunststoff-Handbuch, Band VII, "Polyurethane", 1. Auflage 1966, herausgegeben von Dr. R. Vieweg und Dr. A. Höchtlen sowie 2. Auflage, 1983, und 3. Auflage, 1993, jeweils herausgegeben von Dr. G. Oertel (Carl Hanser Verlag, München) gegeben.

Für zahlreiche Anwendungsgebiete ist es häufig erforderlich, Polyurethanschäume mit Flammschutzmitteln zu versehen, um eine Brandgefahr derartiger Werkstoffe zu minimieren. Neben hinlänglich bekannten halogenhaltigen Flammschutzmitteln, die insbesondere aus ökologischen Gründen unerwünscht sind, ist Melamin insbesondere bei Weichschaumstoffen ein hervorragend geeignetes und in breitem Maße eingesetztes Flammschutzmittel.

In WO 93/07193 setzt man Melamin einem Polymerpolyol zu, wobei unter Zuhilfenahme eines Kieselsäurepräparates und eines Dispersionsmittels eine bessere Lagerfähigkeit der Komponente erreicht werden soll. Die Polyetherole und das Polymerpolyol haben Ethylenoxidanteile unter 25 Gew.-%. In US-A-4745133 wird Melamin als Basisflammschutzmittel verwendet. Die verwendeten Weichschäume weisen Polyetherole mit Ethylenoxidanteilen unter 25 Gew.-% auf. Nach EP-A-0391116 wird Melamin in Polyetherol mit Harnstoffzusätzen verwendet. In EP-A-0422797 wird eine Kombination aus Melamin und Polyharnstoffpolyolen für den Flammschutz im Weichschaum eingesetzt. In EP-A-0439719 werden neben Melamin u.a. Cyanursäurederivate für den Flammschutz verwendet.

Bemerkenswert ist jedoch die Tatsache, dass, wie in EP-A-0665864 ausdrücklich vermerkt, bei Verwendung von Polyolen mit hohen Ethylenoxidanteilen dieser Flammschutz in der Regel nicht zufriedenstellend erreicht wird. Ebenso wird in besagter Schrift darauf verwiesen, dass Polyole auf Basis von Ethylenoxid und Ethylenoxid/Propylenoxid nicht den British Standard-Test - in diesem Fall Crib V - bestehen. Gerade aber diese Anforderung ist bedeutsam für einen Einsatz derartiger hydrophiler Weichschäume, beispielsweise im Wohnbereich.

In EP-A-0642543 wird darauf verwiesen, dass insbesondere bei Verwendung von Melamin eine beachtliche Schaumerweichung zu verzeichnen ist, die für unsere Anwendungszwecke als ungünstig zu betrachten ist.

Es bestand demzufolge die Aufgabe, unter Verwendung von Melamin als Basisflammschutzmittel auch für hydrophile Schäume, die in den wesentlichen polyolischen Bestandteilen aus Polyetherolen mit hohen Ethylenoxidanteilen bestehen, einen Flammschutz gemäß Crib V zu erreichen.

Diese Aufgabe wurde überraschenderweise dadurch gelöst, dass zur Herstellung von hydrophilen flammgeschützten Polyurethanweichschaumstoffen ein Polyetherolgemisch (b), bestehend aus
b1) mindestens einem zwei- bis achtfunktionellen Polyetherol auf der Basis von Propylenoxid und/oder Butylenoxid und Ethylenoxid, wobei der Ethylenoxidanteil, bezogen auf die eingesetzte Gesamtmenge an Alkylenoxid, mehr als 40 Gew.-% beträgt, mit einer OH-Zahl von 20 bis 800 mg KOH/g und einem Anteil an primären OH-Gruppen größer als 50 %, unter der Maßgabe dass b1) mindestens ein mindestens zweifunktionelles Polyetherol b1.1) mit einer OH-Zahl von 20 bis 100 mg KOH/g enthält, und
b2) mindestens einem Polyetherol auf der Basis Propylenoxid und/oder Butylenoxid mit einer OH-Zahl von größer als 30 mg KOH/g,
verwendet wird.

Gegenstand der Erfindung ist somit ein Verfahren zur Herstellung von hydrophilen flammgeschützten Polyurethanweichschaumstoffen durch Umsetzung von organischen und/oder modifizierten organischen Polyisocyanaten (a) mit einem Polyetherolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e), Stabilisatoren (f), Flammschutzmitteln (g) und gegebenenfalls weiteren Hilfs- und Zusatzstoffen (h), das dadurch gekennzeichnet ist, dass das Polyetherolgemisch (b) besteht aus
b1) mindestens einem zwei- bis achtfunktionellen Polyetherol auf der Basis von Propylenoxid und/oder Butylenoxid und Ethylenoxid, wobei der Ethylenoxidanteil, bezogen auf die eingesetzte Gesamtmenge an Alkylenoxid, mehr als 40 Gew.-% beträgt, mit einer OH-Zahl von 20 bis 800 mg KOH/g und einem Anteil an primären OH-Gruppen größer als 50 %, unter der Maßgabe dass b1) mindestens ein mindestens zweifunktionelles Polyetherol b1.1) mit einer OH-Zahl von 20 bis 100 mg KOH/g enthält, und
b2) mindestens einem Polyetherol auf der Basis Propylenoxid und/oder Butylenoxid mit einer OH-Zahl von größer als 30 mg KOH/g
und als Flammschutzmittel (g) Melamin, gegebenenfalls im Gemisch mit weiteren Flammschutzmitteln, verwendet wird.

Gegenstände der Erfindung sind weiterhin die so herstellbaren hydrophilen flammgeschützten Polyurethanweichschaumstoffe sowie deren Verwendung als Sitz- und Polstermaterial.

Wir fanden bei unseren Untersuchungen überraschenderweise, dass durch den Einsatz der erfindungsgemäßen Kombination der Polyole (b) das Brandverhalten von hochethylenoxidhaltigen Schäumen so beeinflußt werden konnte, dass der Crib-V-Test bestanden wird. Der Fachmann hätte eigentlich erwarten müssen, dass bei derartig hohen Anteilen an ethylenoxidreichen Polyolen die Flammschutzkriterien nach Crib V nicht zu erreichen wären.

Zu den erfindungsgemäß im Polyolgemisch eingesetzten Komponenten ist Folgendes auszuführen:

Der Bestandteil (b1) besteht aus mindestens einem zwei- bis achtfunktionellen Polyetherol auf der Basis von Propylenoxid und/oder Butylenoxid und Ethylenoxid mit einer OH-Zahl von 20 bis 800 mg KOH/g, wobei der Ethylenoxidanteil, bezogen auf die eingesetzte Gesamtmenge an Alkylenoxid, mehr als 40 Gew.-% beträgt. Der Anteil an primären OH-Gruppen ist dabei größer als 50 %, vorzugsweise größer als 70 %.

In der Komponente (b1) ist mindestens ein mindestens zweifunktionelles Polyetherol (b1.1) mit einer OH-Zahl von 20 bis 100 mg KOH/g enthalten.

Beispielsweise kommen als (b1.1) hierfür in Betracht: Polyetherole, basierend auf Glycerin, Trimethylolpropan oder Sorbit als Starter. Sie weisen aufgrund des Ethylenoxidendblocks vorwiegend primäre OH-Gruppen auf. Vorzugsweise werden Polyetherole mit Glycerin oder Trimethylolpropan, besonders bevorzugt mit Glycerin als Starter eingesetzt.

Neben den Verbindungen der Komponente (b1.1) können in der Komponente (b1) auch ein oder mehrere weitere oben definierte zwei- bis achtfunktionelle Polyetherole, die eine OH-Zahl von mehr als 100 bis 800 mg KOH/g aufweisen, enthalten sein. Dafür kommen beispielsweise in Betracht: Polyetherole auf Basis von Glycerin, Trimethylolpropan und Ethylendiamin als Starter mit einem Ethylenoxidanteil größer als 80 Gew.-% und einem Ethylenoxidendblock. Bevorzugt werden Glycerin- oder Trimethylpropanderivate mit einer OH-Zahl von 500 bis 650 mg KOH/g verwendet.

Der Bestandteil (b2) besteht aus mindestens einem Polyetherol auf der Basis Propylenoxid und/oder Butylenoxid mit einer OH-Zahl von größer als 30 mg KOH/g.

Beispielsweise kommen hierfür in Betracht: Polyetherole mit Wasser, Propylenglykol oder Glycerin als Starter. Bevorzugt werden Polyole mit einer OH-Zahl von 50 bis 80 mg KOH/g verwendet.

Das Gewichtsverhältnis von Komponente (b1) zu Komponente (b2) beträgt vorteilhafterweise höchstens 3,50.

Vorzugsweise wird die Komponente (b1) dabei in Anteilen von mindestens 60 Gew.-%, bezogen auf das Gesamtgewicht des Polyetherolgemisches (b), eingesetzt.

Die Komponente (b2) kommt vorzugsweise in Anteilen von höchstens 40 Gew.-%, bezogen auf das Gesamtgewicht des Polyetherolgemisches (b), zum Einsatz.

Die genannten Polyetherole werden nach bekannten Verfahren, wie sie beispielsweise weiter unten beschrieben sind, hergestellt.

Die erfindungsgemäßen hydrophilen flammgeschützten Polyurethanweichschaumstoffe werden durch Umsetzung von organischen und/oder modifizierten organischen Polyisocyanaten (a) mit dem oben beschriebenen Polyetherolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e) Stabilisatoren (f), Flammschutzmitteln (g) und gegebenenfalls weiteren Hilfs- und Zusatzstoffen (h) hergestellt.

Zu den verwendbaren weiteren Ausgangskomponenten ist im Einzelnen folgendes auszuführen:

Als organische Polyisocyanate (a) zur Herstellung der erfindungsgemäßen Polyurethane kommen die an sich bekannten aliphatischen, cycloaliphatischen, araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4 und vorzugsweise Hexamethylendiisocyanat-1,6; cycloaliphatische Diisocyanate, wie Cyclohexan-1,3- und-1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Diund Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden. Bevorzugt verwendet werden Toluylendiisocyanat, Gemische aus Diphenylmethandiisocyanat-Isomeren, Gemische aus Diphenylmethandiisocyanat und Roh-MDI oder Toluylendiisocyanat mit Diphenylmethandiisocyanat und/oder Roh-MDI. Besonders bevorzugt eingesetzt werden Gemische aus Diphenylmethandiisocyanat-Isomeren mit Anteilen an 2,4'-Diphenylmethandiisocyanat von mindestens 10 Gew.-%.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: Umsetzungsprodukte von Urethangruppen enthaltenden organischen, vorzugsweise aromatischen, Polyisocyanaten mit NCO-Gehalten von 43 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'und 2,4'-Diphenylmethandiisocyanatmischungen oder modifiziertes Roh-MDI oder 2,4- bzw. 2,6-Toluylendiisocyanat. Die Di- bzw. Polyoxyalkylenglykole können dabei einzeln oder als Gemische eingesetzt werden, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21 Gew.-%, bezogen auf das Gesamtgewicht, z.B. auf Basis von 4,4'-, 2,4'und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gemischt werden.

Besonders bewährt haben sich als modifizierte organische Polyisocyanate NCO-gruppenhaltige Prepolymere, die vorteilhafterweise gebildet werden aus der Reaktion der Isocyanate (a) mit den Polyetherolen (b) sowie gegebenenfalls Verbindungen der Komponenten (c) und/oder (d).

Neben dem oben beschriebenen erfindungsgemäß eingesetzten Polyetherolgemisch (b) werden gegebenenfalls weitere gegenüber Isocyanaten reaktive Wasserstoffatome aufweisende Verbindungen (c) zugegeben.

Hierfür kommen vorrangig Verbindungen mit mindestens zwei reaktiven Wasserstoffatomen in Frage. Dabei werden zweckmäßigerweise solche mit einer Funktionalität von 2 bis 8, vorzugsweise 2 bis 3, und einem mittleren Molekulargewicht von 300 bis 8000, vorzugsweise von 300 bis 5000, verwendet.

Zweckmäßigerweise werden Polyole mit einer Funktionalität von 2 bis 8, vorzugsweise 2 bis 3, und einem mittleren Molekulargewicht von 300 bis 8000, vorzugsweise von 300 bis 5000 verwendet. Die Hydroxylzahl der Polyhydroxylverbindungen beträgt dabei in aller Regel 20 bis 800 und vorzugsweise 20 bis 100.

Die in den Komponenten (b) und (c) verwendeten Polyetherpolyole werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 3, reaktive Wasserstoffatome gebunden enthält, oder durch kationische Polymerisation mit Lewisssäuren, wie Antimonpentachlorid, Borfluorid-Etherat, oder Bleicherde als Katalysatoren aus einem oder mehreren Alkylenoxiden mit 2 bis 4 Kohlenstoffatomen im Alkylenrest hergestellt. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4', 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit.

Die Polyetherpolyole, vorzugsweise Polyoxypropylen- und Polyoxypropylenpolyoxyethylenpolyole, besitzen eine Funktionalität von vorzugsweise 2 bis 8 und insbesondere 2 bis 3 und Molekulargewichte von 300 bis 8000, vorzugsweise 300 bis 6000 und insbesondere 1000 bis 5000 und geeignete Polyoxytetramethylenglykole ein Molekulargewicht bis ungefähr 3500.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, zweckmäßigerweise in den vorgenannten Polyetherpolyolen analog den Angaben der deutschen Patentschriften 1111394, 1222669 (US 3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in EP-B-011752 (US 4304708), US-A-4374209 und DE-A-3231497.

Die Polyetherpolyole können einzeln oder in Form von Mischungen verwendet werden.

Neben den beschriebenen Polyetherpolyolen können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole verwendet werden. Die Hydroxylzahl der Polyhydroxylverbindungen beträgt dabei in aller Regel 20 bis 80 und vorzugsweise 28 bis 56.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1:1 bis 1,8, vorzugsweise von 1:1,05 bis 1,2, katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon, in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Verbindungen der Komponente (c) können einzeln oder in Form von Mischungen verwendet werden.

Die Polyurethanweichschaumstoffe können ohne oder unter Mitverwendung von Kettenverlängerungs- und/oder Vernetzungsmitteln hergestellt werden, wobei diese in der Regel aber nicht erforderlich sind. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der PUR-Schaumstoffe Kettenverlängerungsmittel, Vernetzungsmittel oder Mischungen davon Anwendung finden, kommen diese zweckmäßigerweise in einer Menge bis zu 5 Gew.-%, bezogen auf das Gewicht der Polyolverbindungen, zum Einsatz.

Als Treibmittel (d) können die aus der Polyurethanchemie allgemein bekannten Fluorchlorkohlenwasserstoffe (FCKW) sowie hochund/oder perfluorierte Kohlenwasserstoffe verwendet werden. Der Einsatz dieser Stoffe wird jedoch aus ökologischen Gründen stark eingeschränkt bzw. ganz eingestellt. Neben HFCKW und HFKW bieten sich insbesondere aliphatische und/oder cycloaliphatische Kohlenwasserstoffe, insbesondere Pentan und Cyclopentan oder Acetale, wie z.B. Methylal, als Alternativtreibmittel an. Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. EP-A-0351614. Die eingesetzte Menge des Treibmittels bzw. der Treibmittelmischung liegt dabei bei 1 bis 15 Gew.-%, vorzugsweise 1 bis 10 Gew.-%, jeweils bezogen auf das Gesamtgewicht der Komponenten (b) bis (h).

Weiterhin ist es möglich und üblich, als Treibmittel der Polyolkomponente Wasser in einer Menge von 0,5 bis 5 Gew.-%, vorzugsweise 1 bis 5 Gew.-%, bezogen auf das Gesamtgewicht der Komponenten (b) bis (h), zuzusetzen. Der Wasserzusatz kann in Kombination mit dem Einsatz der anderen beschriebenen Treibmittel erfolgen.

Als Katalysatoren (e) zur Herstellung der Polyurethanweichschaumstoffe werden insbesondere Verbindungen verwendet, die die Reaktion der reaktiven Wasserstoffatome, insbesondere hydroxylgruppenenthaltender Verbindungen der Komponenten (b), (c) und (d), mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamn, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin. Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,01 bis 5 Gew.-%, insbesondere 0,05 bis 2 Gew.-% Katalysator bzw. Katalysatorkombination, bezogen auf das Gewicht der Komponenten (b) bis (h).

Als Stabilisatoran (f) werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate oder Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopoylsiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Die oberflächenaktiven Substanzen werden üblicherweise in Mengen von 0,01 bis 5 Gew.-Teilen, bezogen auf 100 Gew.-Teile der Komponenten (b) bis (d), angewandt.

Als Flammschutzmittel (g) wird erfindungsgemäß Melamin eingesetzt. Die Korngröße des Melamins beträgt üblicherweise 1 bis 100 µm, vorzugsweise 10 bis 50 µm. Das Melamin wird in Anteilen von mindestens 10 Gew.-%, vorzugsweise mehr als 15 Gew.-%, jeweils bezogen auf das Gesamtgewicht der Komponenten (b) bis (h), verwendet.

Weitere geeignete Flammschutzmittel, die in Kombination mit Melamin eingesetzt werden können, sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aliumiumoxidhydrat, Antimontrioxid, Arsenoxid, Ammoniumpolyphosphat und Calciumsulfat oder Blähgraphit oder Mischungen aus diesen Flammschutzmitteln und/oder gegebenenfalls aromatische Polyester zum Flammfestmachen der Polyurethanweichschäume verwendet werden. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Komponenten (b) bis (h) zu verwenden. Der Anteil des Melamins am Gesamteinsatz an Flammschutzmittel beträgt dabei mindestens 50 Gew.-%, vorzugsweise 70 bis 90 Gew.-%.

Der Reaktionsmischung zur Herstellung der erfindungsgemäßen hydrophilen flammgeschützten Polyurethanweichschaumstoffe können gegebenenfalls noch weitere Hilfsmittel und/oder Zusatzstoffe (h) einverleibt werden. Genannt seien beispielsweise Füllstoffe, Farbstoffe, Pigmente und Hydrolyseschutzmittel sowie fungistatische und bakteriostatisch wirkende Substanzen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit,

Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.

Nähere Angaben über die oben genannten anderen üblichen Hilfsund Zusatzstoffe sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, oder dem oben zitierten Kunststoffhandbuch, Polyurethane, Band VII, Hanser-Verlag München, Wien, 1. bis 3. Auflage, zu entnehmen.

Zur Herstellung der erfindungsgemäßen Schäume werden die organischen und/oder modifizierten organischen Polyisocyanate (a), das Polyetherolgemisch (b) und gegebenenfalls weiteren gegenüber Isocyanaten reaktive Wasserstoffatome aufweisenden Verbindungen (c) sowie weiteren Bestandteilen (d) bis (h) in solchen Mengen zur Umsetzung gebracht, daß das Äquivalenzverhältnis von NCO-Gruppen der Polyisocyanate (a) zur Summe der reaktiven Wasserstoffatome der Komponenten (b) bis (h) 0,70 bis 1,25:1, vorzugsweise 0,90 bis 1,15:1, beträgt.

Polyurethanschaumstoffe nach dem erfindungsgemäßen Verfahren werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch das kontinuierliche Auftragen des Reaktionsgemisches auf geeignete Bandstraßen zur Erzeugung von Schaumblöcken.

Als besonders vorteilhaft hat es sich erwiesen, nach dem Zweikomponentenverfahren zu arbeiten und die Aufbaukomponenten (b) bis (h) zu einer sogenannten Polyolkomponente, oft auch als Komponente A bezeichnet, zu vereinigen und als Isocyanatkomponente, oft auch als Komponente B bezeichnet, die organischen und/oder modifizierten organischen Polyisocyanate (a), besonders bevorzugt ein NCO-Prepolymer oder Mischungen aus diesem Prepolymeren und weiteren Polyisocyanaten, und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 60°C und insbesondere 35 bis 55°C.

Die nach dem erfindungsgemäßen Verfahren hergestellten Polyurethanweichschaumstoffe weisen eine Dichte von10 bis 800 kg/m³, vorzugsweise von 30 bis 100 kg/m³ und insbesondere von 30 bis 80 kg/m³ auf. Besonders eignen sie sich als Polstermaterial im Möbel- und Autositzsektor.

Die vorliegende Erfindung soll anhand der angeführten Beispiele erläutert werden, ohne jedoch hierdurch eine entsprechende Eingrenzung vorzunehmen.

### Beispiele 1 bis 4 (erfindungsgemäß), Beispiele 5 und 6 (Vergleichsbeispiele)

In Beispiel 5 wurde zum Vergleich eine Standardzusammensetzung der Polyolkomponente gewählt, die geringe Anteile an ethylenoxidreichem Polyol enthält und damit noch den Crib V - Test besteht. Werden entsprechend Zielstellung der vorliegenden Erfindung größere Anteile an ethylenoxidreichem Polyol eingesetzt (Beispiel 6), kann ohne Einhaltung der erfinderischen Lehre ein positiver Crib V - Test nicht mehr erreicht werden.

Eine Polyolzusammensetzung - siehe Tab. 1 - wurde mit einem Isocyanatgemisch, bestehend aus 80 Gew.-Teilen Lupranat® MI und 20 Gew.-Teilen Lupranat® M20A, Kennzahl 95, zu einem Schaumstoffkissen umgesetzt.

Die Kissenrohdichte betrug jeweils 58 - 61 kg/m³. Alle Kissen zeigten ein viskoelastisches Verhalten.

**Tab. 1.**

| Zusammensetzung der Polyolkomponente (in Gew.-Teilen) | | | | | | |
|---|---|---|---|---|---|---|
| Komponente A | Bsp.1 | Bsp.2 | Bsp.3 | Bsp.4 | Bsp.5 | Bsp.6 |
| Lupranol® 2047 | 42,75 | 44,75 | 41,50 | 35,75 | 5,00 | 64,60 |
| Polyol 1 | | | 4,25 | | | |
| Lupranol® 1000 | 12,80 | 12,40 | 12,80 | 12,70 | | |
| Lupranol® 2002 | 13,00 | 13,00 | 10,00 | | | |
| Lupranol® 2095 | 1,60 | | 1,60 | | 65,20 | |
| Lupranol® 2030 | | | | 21,60 | | 5,55 |
| Diethanolamin | | | | | 0,20 | |
| B 8409 | 2,50 | 2,50 | 2,50 | 2,60 | | 2,50 |
| B 8680 | | | | | 0,50 | |
| Melamin | 20,00 | 20,00 | 20,00 | 20,00 | 20,00 | 20,00 |
| TCPP | 4,00 | 4,00 | 4,00 | 4,00 | 4,00 | 4,00 |
| Lupragen® N 201 | 0,20 | 0,20 | 0,20 | 0,20 | 0,40 | 0,20 |
| Polycat 12 | | | | | 1,20 | |
| Lupragen® N 206 | 0,15 | 0,15 | 0,15 | 0,15 | | 0,15 |
| Wasser | 3,00 | 3,00 | 3,00 | 3,00 | 3,50 | 3,00 |
| (b1)/(b2) | 1,66 | 1,76 | 2,01 | 2,81 | kein b2 | kein b2 |
| Crib V | + | + | + | + | + | - |
| Lupranol® 2047 - OH-Zahl 42 mg KOH/g, Polyetheralkohol auf Basis von Propylen- und Ethylenoxid, Ethylenoxidgehalt 81 % (BASF); | | | | | | |
| Polyol 1 - OH-Zahl 146 mg KOH/g, Polyetheralkohol auf Basis von Propylenoxid und Ethylenoxid (Versuchsmuster), Ethylenoxidgehalt 78 %; | | | | | | |
| Lupranol® 1000 - OH-Zahl 55 mg KOH/g, Polyetheralkohol auf Basis von Propylenoxid (BASF); | | | | | | |
| Lupranol® 2002 - OH-Zahl 42 mg KOH/g, Polyetheralkohol auf Basis von Propylenoxid (BASF); | | | | | | |
| Lupranol® 2095 - OH-Zahl 35 mg KOH/g, Polyetheralkohol auf Basis von Propylen- und Ethylenoxid, Ethylenoxidgehalt 14 % (BASF); | | | | | | |
| Lupranol® 2030 - OH-Zahl 55 mg KOH/g, Polyetheralkohol auf Basis von Propylen- und Ethylenoxid, Ethylenoxidgehalt 12 % (BASF); | | | | | | |
| B 8409, B 8680 - Sililkonstabilisatoren (Goldschmidt) | | | | | | |
| Melamin - Korngröße 1-100 µm, vorzugsweise 10-50 µm (BASF) | | | | | | |
| Lupragen® N 201 - Aminkatalysator (BASF); | | | | | | |
| Lupragen® N 206 - Aminkatalysator (BASF); | | | | | | |
| Polycat 12 - Aminkatalysator (Air Products); | | | | | | |
| Lupranat® MI - NCO-Gehalt 33,6 Gew.-%,Isomerengemisch4,4'-Diphenylmethandiisocyanat und 2,4'-Diphenylmethandiisocyanat; | | | | | | |
| Lupranat® M20A - NCO-Gehalt 31,6 Gew.-% Polyphenylenpolymethylenpolyisocyanat; | | | | | | |
| Crib V - British Standard No. 5852 Part 2 | | | | | | |

## Patentansprüche

1. Verfahren zur Herstellung von hydrophilen flammgeschützten Polyurethanweichschaumstoffen durch Umsetzung von organischen und/oder modifizierten organischen Polyisocyanaten (a) mit einem Polyetherolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e), Stabilisatoren (f), Flammschutzmitteln (g) und gegebenenfalls weiteren Hilfsund Zusatzstoffen (h), **dadurch gekennzeichnet, dass** das Polyetherolgemisch (b) besteht aus
b1) mindestens einem zwei- bis achtfunktionellen Polyetherol auf der Basis von Propylenoxid und/oder Butylenoxid und Ethylenoxid, wobei der Ethylenoxidanteil, bezogen auf die eingesetzte Gesamtmenge an Alkylenoxid, mehr als 40 Gew.-% beträgt, mit einer OH-Zahl von 20 bis 800 mg KOH/g und einem Anteil an primären OH-Gruppen größer als 50 %, unter der Maßgabe dass b1) mindestens ein mindestens zweifunktionelles Polyetherol b1.1) mit einer OH-Zahl von 20 bis 100 mg KOH/g enthält, und
b2) mindestens einem Polyetherol auf der Basis Propylenoxid und/oder Butylenoxid mit einer OH-Zahl von größer als 30 mg KOH/g
und als Flammschutzmittel (g) Melamin, gegebenenfalls im Gemisch mit weiteren Flammschutzmitteln, verwendet wird.

2. Verfahren nach Anspruch 1, **dadurch gekennzeichnet, dass** bl) einen Anteil an primären OH-Gruppen größer als 70 % enthält.

3. Verfahren nach Anspruch 1 oder 2, **dadurch gekennzeichnet, dass** das Gewichtsverhältnis von (b1) zu (b2) höchstens 3,50 beträgt.

4. Verfahren nach einem der Ansprüche 1 bis 3, **dadurch gekennzeichnet, dass** als organische und/oder modifizierte organische Polyisocyanate (a) Toluylendiisocyanat, Gemische aus Diphenylmethandiisocyanat-Isomeren, Gemische aus Diphenylmethandiisocyanat und Polyphenylpolymethylenpolyisocyanat oder Toluylendiisocyanat mit Diphenylmethandiisocyanat und/oder Polyphenylpolymethylenpolyisocyanat eingesetzt werden.

5. Verfahren nach einem der Ansprüche 1 bis 4, **dadurch gekennzeichnet, dass** als organische und/oder modifizierte organische Polyisocyanate (a) Gemische aus Diphenylmethandiisocyanat-Isomeren mit Anteilen an 2,4'-Diphenylmethandiisocyanat von mindestens 10 Gew.-% verwendet werden.

6. Verfahren nach einem der Ansprüche 1 bis 3, **dadurch gekennzeichnet, dass** als organische und/oder modifizierte organische Polyisocyanate (a) NCO-gruppenhaltige Prepolymere, gebildet aus der Reaktion der Isocyanate (a) mit den Polyetherolen (b) sowie gegebenenfalls den Komponenten (c) und/oder (d), eingesetzt werden.

7. Verfahren nach einem der Ansprüche 1 bis 6, **dadurch gekennzeichnet, dass** Wasser in Anteilen von 1 bis 5 Gew.-Teilen, bezogen auf das Gesamtgewicht der Komponenten (b) bis (h), eingesetzt wird.

8. Verfahren nach einem der Ansprüche 1 bis 7, **dadurch gekennzeichnet, dass** Melamin in Anteilen von mindestens 10 Gew.-%, bezogen auf das Gesamtgewicht der Komponenten (b) bis (h), eingesetzt wird.

9. Hydrophile flammgeschützte Polyurethanweichschaumstoffe, herstellbar durch Umsetzung von organischen und/oder modifizierten organischen Polyisocyanaten (a) mit einem Polyetherolgemisch (b) und gegebenenfalls weiteren gegenüber Isocyanaten reaktive Wasserstoffatome aufweisenden Verbindungen (c) in Gegenwart von Wasser und/oder anderen Treibmitteln (d), Katalysatoren (e), Stabilisatoren (f), Flammschutzmitteln (g) und gegebenenfalls weiteren Hilfs- und Zusatzstoffen (h), **dadurch gekennzeichnet, dass** das Polyetherolgemisch (b) besteht aus
b1) mindestens einem zwei- bis achtfunktionellen Polyetherol auf der Basis von Propylenoxid und/oder Butylenoxid und Ethylenoxid, wobei der Ethylenoxidanteil, bezogen auf die eingesetzte Gesamtmenge an Alkylenoxid, mehr als 40 Gew.-% beträgt, mit einer OH-Zahl von 20 bis 800 mg KOH/g und einem Anteil an primären OH-Gruppen größer als 50 %, unter der Maßgabe dass b1) mindestens ein mindestens zweifunktionelles Polyetherol b1.1) mit einer OH-Zahl von 20 bis 100 mg KOH/g enthält, und
b2) mindestens einem Polyetherol auf der Basis Propylenoxid und/oder Butylenoxid mit einer OH-Zahl von größer als 30 mg KOH/g
und als Flammschutzmittel (g) Melamin, gegebenenfalls im Gemisch mit weiteren Flammschutzmitteln, verwendet wird.

10. Verwendung der hydrophilen flammgeschützten Polyurethanweichschaumstoffe gemäß Anspruch 9 als Sitz- und Polstermaterial.

## Claims

1. A process for producing hydrophilic, flame-resistant flexible polyurethane foams by reacting organic and/or modified organic polyisocyanates (a) with a polyetherol mixture (b) and, if desired, further compounds (c) containing hydrogen atoms which are reactive toward isocyanates, in the presence of water and/or other blowing agents (d), catalysts (e), stabilizers (f), flame retardants (g) and, if desired, further auxiliaries and additives (h), wherein the polyetherol mixture (b) comprises
b1) at least one two- to eight-functional polyetherol which is based on propylene oxide and/or butylene oxide and ethylene oxide, where the proportion of ethylene oxide, based on the total amount of alkylene oxide used, is more than 40% by weight, and has an OH number of from 20 to 800 mg KOH/g and a proportion of primary OH groups greater than 50%, with the proviso that b1) comprises at least one at least bifunctional polyetherol b1.1) having an OH number of from 20 to 100 mg KOH/g, and
b2) at least one polyetherol which is based on propylene oxide and/or butylene oxide and has an OH number of greater than 30 mg KOH/g,
and melamine is used as flame retardant (g), if desired in admixture with further flame retardants.

2. A process as claimed in claim 1, wherein b1) has a proportion of primary OH groups greater than 70%.

3. A process as claimed in claim 1 or 2, wherein the weight ratio of (b1) to (b2) is not more than 3.50.

4. A process as claimed in any of claims 1 to 3, wherein the organic and/or modified organic polyisocyanates (a) used are tolylene diisocyanate, mixtures of diphenylmethane diisocyanate isomers, mixtures of diphenylmethane diisocyanate and polyphenylpolymethylene polyisocyanate or tolylene diisocyanate with diphenylmethane diisocyanate and/or polyphenylpolymethylene polyisocyanate.

5. A process as claimed in any of claims 1 to 4, wherein the organic and/or modified organic polyisocyanates a) used are mixtures of diphenylmethane diisocyanate isomers having diphenylmethane 2,4'-diisocyanate contents of at least 10% by weight.

6. A process as claimed in any of claims 1 to 3, wherein the organic and/or modified organic polyisocyanates (a) used are NCO-containing prepolymers formed by reaction of the isocyanates (a) with the polyetherols (b) and, if desired, the components (c) and/or (d).

7. A process as claimed in any of claims 1 to 6, wherein water is used in an amount of from 1 to 5 parts by weight, based on the total weight of the components (b) to (h).

8. A process as claimed in any of claims 1 to 7, wherein melamine is used in an amount of at least 10% by weight, based on the total weight of the components (b) to (h).

9. A hydrophilic, flame-resistant flexible polyurethane foam which can be produced by reacting organic and/or modified organic polyisocyanates (a) with a polyetherol mixture (b) and, if desired, further compounds (c) containing hydrogen atoms which are reactive toward isocyanates, in the presence of water and/or other blowing agents (d), catalysts (e), stabilizers (f), flame retardants (g) and, if desired, further auxiliaries and additives (h), wherein the polyetherol mixture (b) comprises
b1) at least one two- to eight-functional polyetherol which is based on propylene oxide and/or butylene oxide and ethylene oxide, where the proportion of ethylene oxide, based on the total amount of alkylene oxide used, is more than 40% by weight, and has an OH number of from 20 to 800 mg KOH/g and a proportion of primary OH groups greater than 50%, with the proviso that b1) comprises at least one at least bifunctional polyetherol b1.1) having an OH number of from 20 to 100 mg KOH/g, and
b2) at least one polyetherol which is based on propylene oxide and/or butylene oxide and has an OH number of greater than 30 mg KOH/g,
and melamine is used as flame retardant (g), if desired in admixture with further flame retardants.

10. The use of a hydrophilic, flame-resistant flexible polyurethane foam as claimed in claim 9 as seat material and upholstery material.

## Revendications

1. Procédé de préparation de mousses souples de polyuréthanne ignifuges et hydrophiles par réaction de polyisocyanates organiques et/ou organiques modifiés (a) avec un mélange de polyéthérols (b) et, éventuellement, d'autres composés (c) présentant des atomes d'hydrogène réactifs aux isocyanates en présence d'eau et/ou d'autres produits moussants (d), catalyseurs (e) stabilisateurs (f), agents ignifuges (g) et, éventuellement, d'autres adjuvants et additifs (h), **caractérisé en ce que** le mélange de polyéthérols (b) se compose
b1) d'au moins un polyéthérol di- à octofonctionnel à base de propylèneoxyde et/ou de butylèneoxyde et d'éthylèneoxyde, dans lequel la proportion d'éthylèneoxyde par rapport à la quantité totale utilisée d'alkylèneoxyde s'élève à plus de 40 % en poids, avec un indice OH de 20 à 800 mg de KOH/g et une proportion de radicaux OH primaires supérieure à 50 %, étant entendu que b1) contient au moins un polyéthérol b1.1) au moins difonctionnel avec un indice OH de 20 à 100 mg de KOH/g et
b2) d'au moins un polyéthérol à base de propylèneoxyde et/ou de butylèneoxyde avec un indice OH supérieur à 30 mg de KOH/g,
et **en ce que** la mélamine est utilisée comme agent ignifuge (g), éventuellement en mélange avec d'autres agents ignifuges.

2. Procédé selon la revendication 1, **caractérisé en ce que** b1) contient une proportion en groupes OH primaires supérieure à 70 %.

3. Procédé selon l'une des revendications 1 ou 2, **caractérisé en ce que** la proportion en poids de (b1) à (b2) s'élève à 3,50 au maximum.

4. Procédé selon l'une des revendications 1 à 3, **caractérisé en ce que** les polyisocyanates organiques et/ou organiques modifiés (a) utilisés sont le toluylènediisocyanate, des mélanges d'isomères de diphénylméthanediisocyanate, des mélanges de diphénylméthanediisocyanate et de polyphénylpolyméthylènepolyisocyanate ou de toluylènediisocyanate avec du diphénylméthanediisocyanate et/ou du polyphénylpolyméthylènepolyisocyanate.

5. Procédé selon l'une des revendications 1 à 4, **caractérisé en ce que** les polyisocyanates organiques et/ou organiques modifiés (a) utilisés sont des mélanges d'isomères de diphénylméthanediisocyanate avec des proportions de 2,4'-diphénylméthanediisocyanate d'au moins 10 % en poids.

6. Procédé selon l'une des revendications 1 à 3, **caractérisé en ce que** les polyisocyanates organiques et/ou organiques modifiés (a) utilisés sont des prépolymères contenant des groupes NCO formés à partir de la réaction d'isocyanates (a) avec les polyéthérols (b) ainsi qu'éventuellement les composants (c) et/ou (d).

7. Procédé selon l'une des revendications 1 à 6, **caractérisé en ce que** l'eau est utilisée dans des proportions de 1 à 5 parties en poids, par rapport au poids total des composants (b) à (h).

8. Procédé selon l'une des revendications 1 à 7, **caractérisé en ce que** la mélamine est utilisée dans des proportions d'au moins 10 % en poids, par rapport au poids total des composants (b) à (h).

9. Mousses souples de polyuréthanne ignifuges et hydrophiles qui peuvent être fabriquées par réaction de polyisocyanates organiques et/ou organiques modifiés (a) avec un mélange de polyéthérols (b) et, éventuellement, d'autres composés (c) présentant des atomes d'hydrogène réactifs aux isocyanates, en présence d'eau et/ou d'autres produits moussants (d), de catalyseurs (e), stabilisateurs (f), agents ignifuges (g) et, éventuellement, d'autres adjuvants et additifs (h), **caractérisées en ce que** le mélange de polyéthérols (b) se compose
b1) d'au moins un polyéthérol di- à octofonctionnel à base de propylèneoxyde et/ou de butylèneoxyde et d'éthylèneoxyde, dans lequel la proportion d'éthylèneoxyde par rapport à la quantité totale utilisée d'alkylèneoxyde s'élève à plus de 40 % en poids, avec un indice OH de 20 à 800 mg de KOH/g et une proportion de radicaux OH primaires supérieure à 50 %, étant entendu que b1) contient au moins un polyéthérol b1.1) au moins difonctionnel avec un indice OH de 20 à 100 mg de KOH/g et
b2) d'au moins un polyéthérol à base de propylèneoxyde et/ou de butylèneoxyde avec un indice OH supérieur à 30 mg de KOH/g
et **en ce que** la mélamine est utilisée comme agent ignifuge (g), éventuellement en mélange avec d'autres agents ignifuges.

10. Utilisation de mousses souples de polyuréthanne ignifuges et hydrophiles selon la revendication 9, comme matériau de siège et de rembourrage.
